**Europäisches Patentamt**

**European Patent Office**

**Office européen des brevets**

(19)

(11) Numéro de publication : **0 487 373 A1**

## (12) DEMANDE DE BREVET EUROPEEN

(21) Numéro de dépôt : **91402954.1**

(22) Date de dépôt : **05.11.91**

(51) Int. Cl.$^5$ : **H04Q 11/04**

(30) Priorité : **06.11.90 FR 9013728**

(43) Date de publication de la demande :
**27.05.92 Bulletin 92/22**

(84) Etats contractants désignés :
**AT BE DE ES FR GB IT NL**

(71) Demandeur : **ALCATEL BUSINESS SYSTEMS**
**12, rue de la Baume**
**F-75008 Paris (FR)**

(72) Inventeur : **Allouis, Jacques**
**1, rue Octave Landwerlin**
**F-67540 Ostwald (FR)**

(74) Mandataire : **Weinmiller, Jürgen et al**
**Lennéstrasse 9 Postfach 24**
**W-8133 Feldafing (DE)**

(54) **Procédé de transmission multi-protocoles et appareil mettant en oeuvre le procédé.**

(57)    La présente invention concerne un procédé de transmission multi- protocoles de communication sur un canal de transmission comme un canal 64 Kbits/s, notamment pour les réseaux à intégration de services RNIS-ISDN. Le procédé de l'invention vise à favoriser l'exploitation d'autres protocoles de communication. L'invention concerne aussi un appareil mettant en oeuvre le procédé de l'invention. L'invention trouve application dans le domaine de la téléinformatique.

L'invention se caractérise en ce que le canal 64 kbits/seconde est bourré par la duplication (27, 28, ...) d'un octet de signalisation, le mot de données transmis (26) étant accolé dans une première transmission audit octet (25) de signalisation. Selon le rôle de l'octet de signalisation, son premier bit est à "0" ou "1".

# FIG. 5

EP 0 487 373 A1

La présente invention concerne un procédé de transmission multi-protocoles destiné à un canal de transmission comme un canal 64 Kbits/s, notamment pour les réseaux à intégration de services RNIS-ISDN. Le procédé de l'invention vise à permettre la transmission de données tout en favorisant l'exploitation d'autres protocoles de communication. L'invention concerne aussi un appareil mettant en oeuvre le procédé de l'invention. L'invention trouve application dans le domaine de la téléinformatique.

Dans l'art antérieur, on connaît des réseaux de communication fonctionnant sous un protocole de communication donné. Dans un tel protocole, les données sont réparties en données d'information réelle et en données de signalisation. Les protocoles sont notamment destinés à allouer dans le temps de transmission, c'est à dire dans une trame temporelle, des instants caractéristiques à chaque type des données réparties en mots comportant un ou plusieurs éléments binaires ou bits.

Le fait que des équipements transmetteurs de données répondent à un protocole donné les rend peu facilement adaptable à d'autres protocoles.

Or, le changement de protocole est nécessaire, en particulier, pour suivre l'évolution de la technologie de transmissions, en particulier pour le support de la transmission à longue distance appelé aussi canal de transmission externe.

Jusqu'à il y a quelques années, on disposait du réseau téléphonique et du réseau téléphonique commuté qui présentaient des caractéristiques de débit auxquelles les divers protocoles répondaient.

Depuis quelques années, les réseaux téléphoniques à longue distance ont admis des canaux de transmission binaire notamment des canaux de transmission à 64 Kbits/s, en particulier destinés au réseau RNIS ou ISDN.

Afin de convertir les protocoles existants et permettre de les adapter les uns aux autres, il est bien connu dans l'art antérieur d'utiliser des convertisseurs de protocoles qui s'interposent entre l'équipement transmetteur ou récepteur de données et le reste du réseau quand les deux parties ont des comportements différents non adaptés. C'est notamment le cas pour utiliser un canal à 64 kbits/s RNIS quand on utilise le protocole ECMA 102 fonctionnant en mode trame de 80 bits qui nécessite une désencapsulation de la trame. On peut ainsi récupérer les octets des données effectivement transmis avant de convertir le protocole.

La présente invention apporte une nouvelle solution afin de perfectionner les systèmes de l'art antérieur. C'est un objet de la présente invention de permettre une accessibilité directe aux octets de données transmis sans traitement préalable par désencapsulation d'une trame.

C'est un autre objet de la présente invention de favoriser les échanges en temps réel entre au moins deux équipements distants de part et d'autre du canal de transmission 64 Kbits/s.

C'est un autre avantage de la présente invention de permettre la mise en place d'un procédé d'adaptation automatique de débit sans connaissance préalable de la vitesse de transmission de chacun des accès distants.

En effet, la présente invention concerne un procédé de transmission de données par trames successives sur un canal de transmission comme un canal 64 Kbits/s notamment pour les réseaux à intégration de services RNIS-ISDN, favorisant l'exploitation d'autres protocoles de communication. L'invention se caractérise en ce qu'elle consiste à transmettre sur le canal au moins un couple de mots consistant en un mot de signalisation et un mot de donnée et dans lequel le premier élément binaire du mot de signalisation est à un état logique prédéterminé (1 ou 0) pour indiquer que le second mot du couple de mots est un mot de donnée et en ce que le reste de la trame est complétée par bourrage.

Selon un autre aspect de l'invention, le bourrage du canal est réalisé par duplication du mot de signalisation dont le premier élément binaire du mot de signalisation dupliqué est mis à un second état logique (0 ou 1).

L'invention concerne aussi un appareil adapté à la mise en oeuvre de l'invention.

D'autres caractéristiques et avantages de la présente invention seront mieux compris à l'aide de la description et des dessins annexés, dans lesquels :

– Les figures 1A et 1B représentent l'octet de signalisation selon le sens de transmission sur le réseau de communication ;

– La figure 2 représente un premier mode de réalisation de l'invention ;

– La figure 3 représente un second mode de réalisation de la présente invention ;

– La figure 4 représente un troisième mode de réalisation selon la présente invention ;

– La figure 5 représente l'état du canal 64 kbits/s après bourrage ;

– La figure 6 représente un dispositif mis en oeuvre dans l'invention afin de permettre une adaptabilité des débits entre équipements distants ;

– La figure 7 représente un échange de données selon l'un des modes de réalisation de la présente invention.

Dans ce qui va suivre, on utilisera le terme de prise de donnée ou plus simplement prise, pour définir le module comprenant le raccordement à un premier protocole et la gestion du procédé de transmission en mode octet.

D'autre part, on utilise le cas du protocole V 24 comme protocole sous lequel fonctionne les équipements distants.

Dans la suite de la description, on envisage trois cas principaux de communications de données :

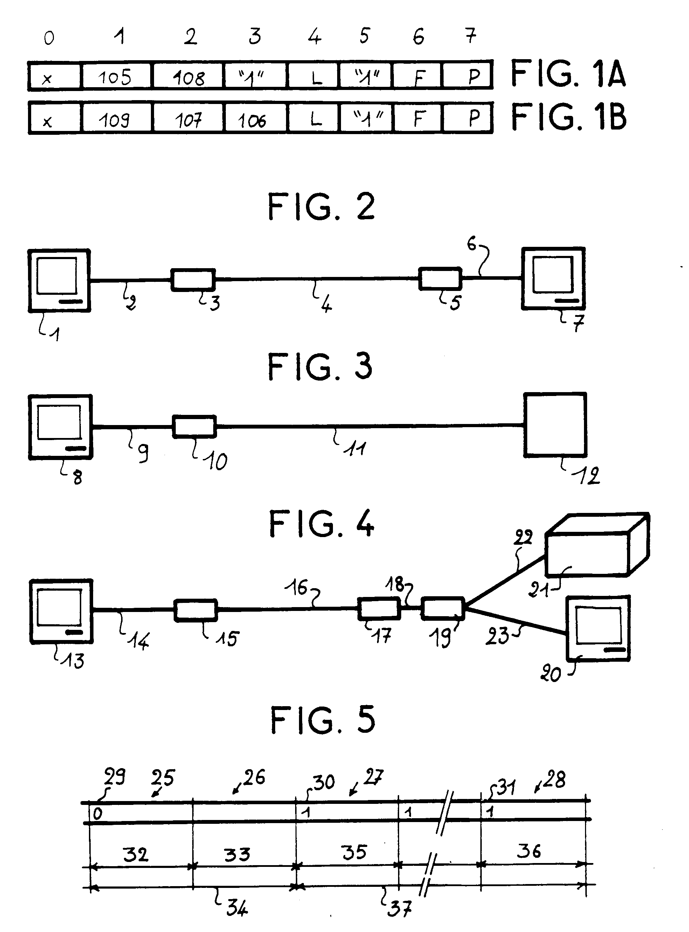

– la communication entre deux terminaux raccordés sur des prises de données (figure 2) ;

– le cas de l'accès d'un terminal à une application (figure 3) ;

– le cas de l'accès à un terminal ou à un serveur de données distant en mode ECMA 102.

Dans chacun de ces trois cas, la communication s'établit :

– au niveau local : lorsque les deux extrémités sont situées sur la même installation,

– au niveau distant : lorsque les extrémités sont situées sur des installations différentes. Dans ce cas, le canal 64 kbits/s est transmis en mode CCBT sur un canal B à travers le RNIS.

Selon l'invention, on utilise les caractéristiques de la transmission en mode octet qui permet de transmettre dans le canal 64 Kbits/s affecté en interne au terminal, les informations de données et de signalisation de la prise V24 sous forme d'un couple de deux octets. Une fois le circuit de transmission établi, les données sont directement accessibles pour permettre leur manipulation lors de l'adaptation ou de la conversion de protocole, avant leur transmission au terminal distant.

Aux figures 1A et 1B, on a représenté les rangs de l'octet de signalisation selon le côté de la liaison locale entre l'équipement transmetteur de données ETTD et l'équipement de télécommande à distance ETCD.

A la figure 1A, on a représenté l'affectation des différents rangs du mot de signalisation du côté de l'Equipement Transmetteur à Distance ETTD. Au rang 0, on utilise un bit ou élément binaire indiquant le type de l'octet : si le rang 0 est à "0", l'octet qui suit est un octet de donnée.

Si le rang 0 est à "1", l'octet est un octet de bourrage.

A la figure 1A, les rangs 1 et 2 sont occupés par les signaux de circuit 105 et 108 de la prise V24 interfaçant l'équipement terminal transmetteur de données ETTD à l'équipement de télécommande distant ETCD. Puis, le rang 3 est un élément binaire à "1" qui indique l'échantillonnage des circuits de la prise V24.

Le bit de rang 4 indique l'établissement de la liaison: il est à "1" si la communication n'est pas établie et à "0" si elle est établie. L'élément binaire de rang 5 est toujours à "1" et n'est pas utilisé directement par le procédé de l'invention.

L'élément binaire de rang 6 permet de contrôler le flux de transmission synchrone : il est à "0" dans le cas de la transmission et à "1" dans le cas de l'état d'attente.

L'élément binaire de rang 7 noté P indique la parité de l'octet de signalisation.

A la figure 1B, on a représenté l'attribution des éléments binaires du mot de signalisation vu du côté de l'équipement ETCD. Les rangs 0, 4, 5, 6, et 7 ont les mêmes attributions respectives que pour l'équipement ETTD. Les rangs 1, 2 et 3 sont des éléments binaires permettant l'échantillonnage des circuits de la prise V24.

A la figure 2, on a représenté un premier mode de réalisation de l'invention dans le cas de la communication entre des terminaux distants ETTD 1 et 7. Ces terminaux ETTD sont chacun connectés à une prise V24 par l'intermédiaire d'un canal local par exemple fonctionnant en protocole V24. Ainsi, le premier équipement ETTD 1 transmet à une prise ETCD 3 des données par l'intermédiaire d'un canal V24, désigné par le repère 2. L'équipement 3 est connecté au canal 4 à 64 Kbits/s en mode synchrone dont l'autre extrémité est connectée à la prise 5 ETCD connectée au canal local 6 V24 connecté à l'autre équipement ETTD 7. Les deux équipements 1 et 7 peuvent être classiquement des stations de travail connectées dans un réseau hétérogène. Les deux terminaux fonctionnent suivant le même mode de transmission synchrone ou asynchrone. Les deux prises 3 et 5 se comportent ainsi comme des équipements ETCD. Lors du fonctionnement en mode asynchrone, les terminaux peuvent avoir des vitesses de transmission différentes, les prises 3 et 5 réalisant l'adaptation des débits sur la vitesse la plus lente.

La transmission synchrone à 64 Kbits/s est alors directement réalisée entre les deux prises de raccordement.

A la figure 3, on a représenté un second mode de réalisation de l'invention selon laquelle un terminal distant sur un réseau de données est interconnecté avec un autre terminal n'ayant pas le même mode de transmission. Dans ce cas, on peut gérer des modes de transmission asynchrone- synchrone, caractère-paquet ou encore un accès sur un réseau local. L'application (ou logiciel d'application) est chargée de faire l'adaptation du protocole et accède alors directement aux octets de données et de signalisation du canal de transmission synchrone à 64 Rbits/s. L'homme de métier sait adapter les applications en leur adjoignant un module de communication convenable destiné à extraire du canal 64 kbits/s synchrone les octets de données nécessaires à l'application.

Dans la figure 3, le terminal 8 est l'équipement ETTD et est connecté au canal local 9 V24 et à une prise 10 ETCD. La prise 10 est connectée au canal 64 kbits/s synchrone 11 dont l'autre extrémité est connectée à l'équipement sur lequel tourne l'application 12.

A la figure 4, on a représenté un troisième mode de réalisation de la présente invention. C'est le cas d'une communication de données où l'équipement distant fonctionne suivant le protocole ECMA 102. La communication met alors en oeuvre un module de gestion de protocole 19 ECMA 102. La prise 17 sur laquelle il est raccordé par le canal local 18 lui transmet les circuits de données et de commande du terminal local 20 en se présentant comme un Equipement Transmetteur Terminal de Données ETTD. Le serveur ECMA 102 21 communique par un canal 22 avec le module de gestion 19.

La prise 17 servant d'Equipement Transmetteur Terminal de Données ETTD est connectée au canal 64 Kbits/s synchrone 16 dont l'autre extrémité est connectée à une prise 15 servant d'ETCD distant connectée à un canal V24 14 à un terminal ETTD 13.

L'établissement logique de la liaison intervient après l'établissement physique du circuit 64 Kbits/s pour initialiser la transmission de données. La liaison est établie au niveau des deux prises 15 et 17 à la fin de la session de mise en relation, en plaçant le bit L de l'octet ou mot de signalisation à l'état actif. La transmission ne commence que lorsque les bits L de rang 4 de chaque prise 15 et 17 sont à l'état actif.

A la figure 5, on a représenté un schéma de principe de la transmission dans le protocole de l'invention. Dès la réception d'un octet de données sur la prise V24 provenant de l'un des équipements, un couple octet de signalisation 25 - octet de donnée 26 est transmis sur le canal 64 Kbits/s. Le premier bit 29 de l'octet de signalisation est à "0" pour indiquer la présence à sa suite de l'octet de donnée. Les bits affectés au circuit de commande de la prise V24 ont pour valeur le niveau échantillonné lors de la réception de l'octet de donnée.

Le transfert de données est réalisé dès la réception de l'octet de donnée sur la prise V24 réceptrice au débit de transmission du terminal émetteur. Le bourrage du canal 64 Kbits/s est réalisé par la répétition de l'octet de signalisation 27, 28 dans lequel le premier bit 30, 31 est positionné à "1". Seuls les bits affectés au contrôle de flux et à la parité sont alors significatifs, les bits affectés aux circuits de la prise V24 ne sont que la duplication de ceux qui ont été transmis dans le couple 25, 26 et ne sont pas pris en compte dans le traitement ultérieur.

Ainsi, on remarque à la figure 5 que la première partie 34 de la trame 64 Kbits/s comporte l'octet 25 de signalisation pendant une durée 32 puis, l'octet 26 de données pendant une durée 33 effective pour la transmission de données réelles. Pour compléter la trame insérée sur le canal au débit de transmission de l'émetteur, on a complété la partie libre en bourrant le canal 64 Kbits/s pendant la durée 37, en répétant l'octet de signalisation durant les périodes 35 ... 36.

L'octet de signalisation est caractérisé par un dernier bit de parité calculé sur les 7 premiers bits de l'octet afin de rendre fiable la transmission notamment de l'octet de signalisation. L'octet de donnée comporte un bit de parité en mode de transmission asynchrone.

Par contre, en mode de transmission synchrone, les octets de données transmis constituent généralement un message de niveau supérieur. Dans ce cas, le message comporte sa propre fonction de contrôle de transmission, comme par exemple la génération de codes de recouvrement d'erreurs CRC, etc. La couverture introduite par la vérification systématique de la parité des octets de signalisation est alors considérée comme suffisante pour s'affranchir de la génération d'un bit de parité spécifique pour l'octet de donnée. En effet, l'octet de donnée en transmission synchrone ne comportant pas de parité, le contrôle de la qualité de la transmission est cependant suffisant car, dans la trame temporelle, la majorité des octets sont des octets de signalisation qui comportent un bit de parité chacun.

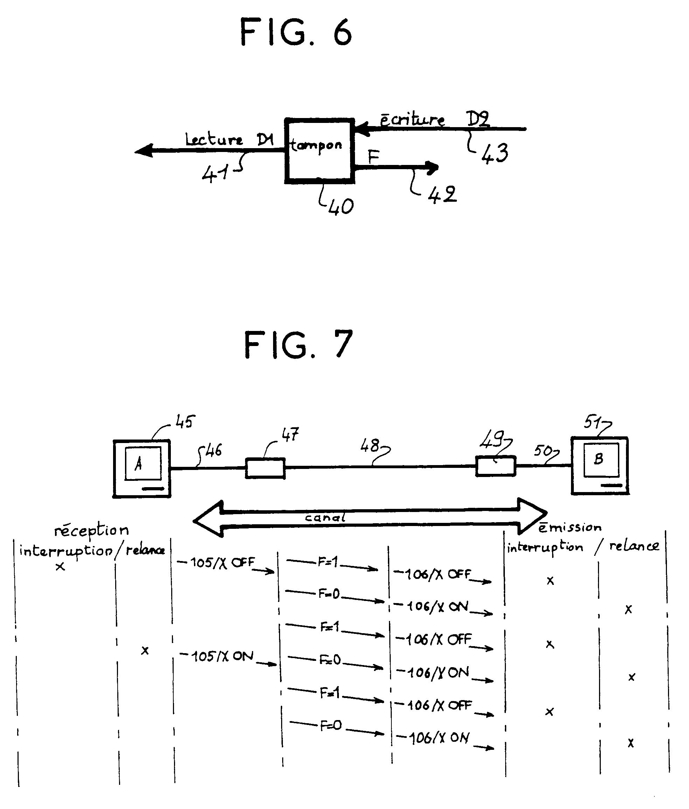

Aux figures 6 et 7, on a représenté un moyen, adapté à un appareil mettant en oeuvre le procédé de l'invention, et permettant d'adapter les débits en mode asynchrone lorsque les terminaux ou équipements ETTD ont des vitesses de transmission différentes. Cette adaptation de débits n'est réalisée que lors de la communication entre des terminaux raccordés à l'installation par une prise de données ou encore entre un terminal raccordé à l'installation par une prise de données et une application.

Dans le cas du fonctionnement en mode ECMA 102, l'adaptation du débit est laissée au protocole ECMA. Dans ce cas, la transmission de l'information de débit du terminal connecté sur la prise de données au volume de gestion ECMA est gérée directement par le module de gestion ECMA.

A la figure 6, on a représenté un circuit 40 servant de tampon de réception dans le sens canal à 64 Kbits/s vers terminal. Le tampon fonctionne alors comme une mémoire de type FIFO dans laquelle la première donnée entrée est la première donnée extraite. Ceci permet de mémoriser les couples octet de signalisation/ octet de donnés reçus lorsque le débit de l'émetteur est supérieur au débit du récepteur. On constate qu'on place le circuit 40 du côté du terminal récepteur plus lent.

Dans un mode de réalisation préféré, le circuit 40 comporte donc une mémoire vive dotée de deux voies distinctes et indépendantes de lecture et d'écriture. Le circuit comporte aussi un moyen pour détecter le fait que la mémoire est presque pleine ou qu'elle est presque vide. La frontière avant laquelle la détection est faite est réglée en fonction de considérations technologiques à la portée de l'homme de métier.

Les moyens de détection précités sont connectés à un moyen pour régler la valeur "1" ou "0" de l'élément binaire F de rang 6 de l'octet de signalisation retransmis par l'équipement récepteur. Ainsi, le circuit tampon 40 peut contrôler le débit d'émission et déclencher les lectures du récépteur qui lit sa mémoire.

Le circuit 40 reçoit sur son entrée d'écriture 43 les données selon un débit D2 supérieur au débit de lecture D1 de sa sortie de lecture 41. Enfin le circuit 40 génère un bit de signalisation F qui est inséré au rang 6 de l'octet de signalisation notamment dans le cas de la figure 1A ou 1B.

L'écriture et la lecture du tampon sont indépendantes.

A la figure 7, on a représenté un diagramme temporel expliquant la gestion des interruptions d'émission et de réception. On a représenté un terminal A 45 présentant un débit maximum D1 inférieur au débit D2 du terminal D 51 distant. Comme dans le cas de la figure 2, le terminal A 45 est connecté par une liaison locale 45 à une prise 47 d'accès au canal 48 à 64 Kbits/s. De même, le terminal 51 est connecté par une liaison locale 50 à la prise 49 connectée à l'autre extrémité du canal 48.

On va décrire une transmission de données dans le sens terminal 51 vers terminal 45. Les premières données traversent le canal 48 et sont stockées dans le tampon 40 au niveau de la prise 47. Quand celui-ci est proche de la saturation, sa sortie 42, qui fixe l'état de l'élément ou bit F (rang 6) du mot de signalisation, passe de "0" à "1", et le terminal 45 envoie un ordre d'interruption de réception par le positionnement à l'état OFF du circuit 105/X par l'élément binaire ou bit de rang 3. Cette première transmission a été rendue possible puisque l'octet de signalisation comporte un bit F à 1 et que la prise 49 a validé son circuit 106/X à l'état inactif OFF. Ceci a entraîné une interruption d'émission. Après l'interruption de réception par le terminal 45, la prise 47 place l'octet de signalisation à "0", c'est-à-dire à un caractère de type X-OFF et la prise 49 recevant l'octet de signalisation par le canal 48 place son circuit 106/X à l'état actif ON. Le terminal 51 reprend alors l'émission. Le couple octet de signalisation/ octet de données suivant transite alors sur le canal 48. Ceci est rendu possible par le positionnement à "1" du bit F par la prise 47. De ce fait, le terminal A 45 relance la réception en plaçant le circuit 105/X à l'état ON. Le procédé de transmission se poursuit et entre donc une zone de contrôle de flux local sur le canal 46, une zone de contrôle du flux interne sur le canal 48 et une zone de contrôle de flux local sur le canal 50.

De ce fait, la gestion de l'écriture dans le tampon est faite à travers le canal synchrone 48 au moyen du bit F :

Le passage de "0" à "1" du bit F indique que le tampon 40 est proche de la saturation. Le tampon génère, par la ligne 42 entre la prise de données distante 49 et le terminal qui lui est raccordé 51, l'envoi d'un signal d'arrêt de transmission sous la forme :

– du passage à l'état OFF du circuit 106 de la prise V24,

– de l'envoi dans la bande d'un caractère X-OFF ou autre initialement défini et ayant un effet similaire.

Le passage de "1" à "0" du bit F indique que le tampon est vide ou proche de l'être. Il est donc possible de le recharger à nouveau. Le tampon 40 génère entre la prise de données distante et le terminal qui lui est raccordé l'envoi d'un signal de reprise d'émission sous la forme :

– du passage à l'état actif ON du circuit 106 de la prise V24 47,

– de l'envoi dans la bande d'un caractère X-ON ou autre initialement défini et ayant un effet similaire.

La gestion de la lecture du tampon 40, est réalisée localement sur commande du terminal 45 de la façon suivante:

Dans un premier temps, le terminal interrompt la réception par :

– passage à l'état inactif OFF du circuit 105 de la prise V24 47,

– l'envoi dans la bande par le terminal 45 d'un caractère X-OFF ou autre initialement défini et ayant un effet similaire.

Dans un second temps, le terminal reprend la réception :

– par passage à ON du circuit 105 de la prise V24 47,

– puis le terminal 45 envoie dans la bande par le terminal 45 d'un caractère X-ON ou autre initialement défini et ayant un effet similaire.

Dans les deux cas d'écriture et de lecture, on laisse le choix du moyen de contrôle de la transmission du terminal 51 vers le terminal 45 au moment de l'initialisation de la prise.

La profondeur ou capacité du tampon ainsi que les limites qui déclenchent l'état du bit F sont déterminées en fonction des différentes configurations des données à envisager : locale ou distante, et en fonction des temps de réponse aux commandes d'interruption et de relance des terminaux des données.

## Revendications

1. Procédé de transmission de données par trames successives sur un canal de transmission comme un canal 64 Kbits/s, notamment pour les réseaux à intégration de service RNIS-ISDN, favorisant l'exploitation d'autres protocoles de communication, caractérisé en ce qu'il consiste à transmettre sur le canal au moins un couple de mots constitué d'un mot de signalisation et d'un mot de données, couple dans lequel le premier élément binaire du mot de signalisation est à un état logique prédéterminé ("1" ou "0") pour indiquer que l'autre mot du couple est un mot de données, et en ce que le reste de la trame est complété par bourrage.

2. Procédé selon la revendication 1, caractérisé en ce que le bourrage du canal est réalisé par duplication du mot de signalisation dont le premier élément binaire du mot de signalisation dupliqué est mis à un second état logique ("1" ou "0"), notamment pour rendre plus fiable la transmission sur le canal.

3. Procédé selon la revendication 1 ou 2, caractérisé en ce que les mots de signalisation et de données sont de longueur fixée comme un octet.

4. Procédé selon la revendication 1, caractérisé en ce que la transmission sur le canal est exécutée de manière synchrone et en ce que le mot de signalisation recopie sur ses éléments binaires de rang "1", "2" et "3", de l'état des circuits de la prise de données (3, 5) à laquelle l'équipement terminal (ETTD ou ETCD) (1, 7) est connecté.

5. Procédé selon la revendication 1, caractérisé en ce que le mot de signalisation comporte un élément binaire (rang "4") qui prend une première valeur si la liaison est établie et une seconde valeur, si la liaison n'est pas établie.

6. Procédé selon la revendication 1, caractérisé en ce que le mot de signalisation comporte un élément binaire (rang "6") qui prend une première valeur en cours de transmission et une seconde valeur en cours d'attente.

7. Procédé selon la revendication 1, caractérisé en ce que le mot de signalisation comporte un élément binaire (rang "7") qui indique la parité du mot de signalisation.

8. Procédé de transmission entre deux terminaux distants (ETTD) (1,7) reliés au canal de transmission (4) par des prises de données (3, 5), selon l'une des revendications précédentes, caractérisé en en ce que les prises (3, 5) réalisent une adaptation des débits de données en fonction de la vitesse de transmission reconnue la plus basse.

9. Procédé de transmission entre deux terminaux (8,12) dont l'un (12) est directement connecté au canal de transmission 64 kbits/sec (11) et l'autre (8), sur un mode de transmission hétérogène (9) est connecté au canal (11) via une prise de données (10), procédé selon l'une des revendications 1 à 7, caractérisé en ce que le terminal (12) connecté directement au canal (11) exécute un logiciel d'application, qui fait l'adaptation du protocole et accède directement aux mots de données et de signalisation du canal 64 kbits/sec (11) de façon à gérer l'un au moins des modes de transmission : asynchrone- synchrone, caractère-paquet ou accès sur un réseau local.

10. Procédé de transmission selon l'une des revendications 1 à 7, caractérisé en ce que, le canal synchrone (16) est connecté à au moins deux prises de données (15, 17) servant d'Equipement Transmetteur Terminal de Données (ETTD) dont la première (15) est connectée via un canal local (14) à un terminal (13) fonctionnant sous un premier protocole et la seconde (17) est connectée via un canal local (18) à un module de gestion de protocole ECMA 102 (19) qui gère un réseau de canaux locaux (22, 23...) connectés notamment à un terminal ETTD (20) et à un serveur ECMA 102 (21), l'établissement logique de la liaison intervenant après l'établissement physique du circuit synchrone sur le canal (16) pour initialiser la transmission, puis à la fin d'une session de mise en relation, en plaçant l'élément binaire (L) du mot de signalisation à l'état actif, et enfin en commençant la transmission sur le canal (16) quand les bits (L) de rang 4 de chaque prise de données (15, 17) sont à l'état actif.

11. Procédé de transmission selon l'une au moins des revendications précédentes, selon lequel au moins une prise de données du côté du terminal (45) récepteur ayant un débit (D1) inférieur à celui (D2) du terminal (51) émetteur comporte un tampon (40) de réception, caractérisé en ce que l'élément binaire (F) de rang 6 du mot de signalisation est mis à un premier état par une sortie (42) du tampon 40, pour indiquer que le tampon (40) est plein, et à un second état pour indiquer que le tampon (40) est vide, le tampon (40) étant lu au débit (D1) sur une sortie (41) du récepteur (45) et étant écrit au débit (D1) sur son entrée (43), simultanément.

12. Procédé de transmission selon la revendication 11 caractérisé en ce que, le terminal (45) le plus lent place l'élément binaire de rang 4 (dit circuit 106/x) à un niveau représentant un état OFF pour interrompre la transmission du terminal (51) le plus rapide quand l'élément binaire F (de rang 6) a été mis à l'état indiquant que le tampon (40) est plein.

13. Procédé de transmission selon la revendication 12 caractérisé en ce que, après l'interruption de réception par le terminal (45) le plus lent, sa prise de données (47) place le mot de signalisation à un état de type "X-OFF", dont la réception par le terminal le plus rapide (51) interrompt l'émission.

14. Procédé de transmission selon la revendication 11 caractérisé en ce que, le terminal (45) le plus lent place l'élément binaire de rang 4 (dit circuit 106/x) à un niveau représentant un état ON pour demander une reprise de la transmission sur le terminal (51) le plus rapide quand l'élément binaire F (de rang 6) a été mis à l'état indiquant que le tampon (40) est vide.

**15.** Procédé de transmission selon la revendication 14 caractérisé en ce que, après la demande de reprise d'émission présentée par le terminal (45) le plus lent, sa prise de données (47) place le mot de signalisation à un état de type "X-ON", pour l'envoi d'un signal de reprise d'émission par le terminal (51) le plus rapide.

**16.** Procédé de transmission selon la revendication 11, caractérisé en ce que, le terminal (45) le plus lent place l'élément binaire de rang 1 (dit circuit 105/x) à un niveau représentant un état OFF pour interrompre la transmission du terminal (51) le plus rapide quand l'élément binaire F (de rang 6) a été mis à l'état indiquant que le tampon (40) est plein.

**17.** Procédé de transmission selon la revendication 16, caractérisé en ce que, après l'interruption de réception par le terminal (45) le plus lent, sa prise de données (47) place le mot de signalisation à un état de type "X-OFF", dont la réception par le terminal le plus rapide (51) interrompt l'émission.

**18.** Procédé de transmission selon la revendication 11, caractérisé en ce que, le terminal (45) le plus lent place l'élément binaire de rang 1 (dit circuit 105/x) à un niveau représentant un état ON pour relancer la transmission du terminal (51) le plus rapide quand l'élément binaire F (de rang 6) a été mis à l'état indiquant que le tampon (40) est vide.

**19.** Procédé de transmission selon la revendication 18, caractérisé en ce que, après la demande de relance de transmission par le terminal (45) le plus lent, sa prise de données (47) place le mot de signalisation à un état de type "X-ON", pour l'envoi d'un signal de reprise d'émission par le terminal (51) le plus rapide.

**20.** Appareil de mise en oeuvre du procédé selon l'une des revendications précédentes.

**21.** Appareil selon la revendication précédente, caractérisé en ce que chaque prise de données de réception, plus lente que la prise de données émettrice à laquelle elle est connectée, comporte un circuit tampon (40) comportant une mémoire à deux canaux indépendants de lecture ou d'écriture de données provenant de la prise émettrice, des moyens pour détecter que la mémoire est presque pleine ou presque vide qui sont connectés à des moyens pour régler l'état ("1" ou "0") de l'élément binaire F de rang 6 de l'octet de signalisation, de façon à contrôler l'émission de la prise de données plus rapide et/ ou la réception des données sur le terminal récepteur.

| 0 | 1 | 2 | 3 | 4 | 5 | 6 | 7 | |
|---|---|---|---|---|---|---|---|---|
| x | 105 | 108 | "1" | L | "1" | F | P | FIG. 1A |
| x | 109 | 107 | 106 | L | "1" | F | P | FIG. 1B |

## FIG. 2

## FIG. 3

## FIG. 4

## FIG. 5

# FIG. 6

# FIG. 7

Office européen
des brevets

**RAPPORT DE RECHERCHE EUROPEENNE**

Numero de la demande

EP  91 40 2954

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 346 806  (SIEMENS)<br>* Résumé; page 4, lignes 8-17; page 11, ligne 30 - page 12, ligne 16; page 13, lignes 7-18; page 17, lignes 4-9; figures 1,2 * | 1,3,8, 20 | H 04 Q   11/04 |
| Y | | 10-13, 21 | |
| A | --- | 2,4-7,9 | |
| Y | IEEE JOURNAL OF SOLID-STATE CIRCUITS, vol. 24, no. 6, décembre 1989, pages 1625-1633, New York, US; H.J. BUSSCHAERT et al.: "A rate adaption coprocessor for terminal adapters and U-interface modems"<br>* Résumé; page 1627, colonne de gauche, lignes 8-14; page 1629, colonne de gauche, ligne 26 - colonne de droite, ligne 4; page 1630, colonne de droite, lignes 2-6; page 1630, colonne de droite, ligne 34 - page 1631; colonne de gauche, ligne 35; figures 2,3,6,8 *<br>--- | 10-13, 21 | |
| | | | **DOMAINES TECHNIQUES RECHERCHES (Int. Cl.5)** |
| A | IDEM<br>----- | 1,14-19 | H 04 Q |

Le présent rapport a été établi pour toutes les revendications

| Lieu de la recherche | Date d'achèvement de la recherche | Examinateur |
|---|---|---|
| LA HAYE | 16-02-1992 | O'REILLY D.J.K. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant